# EUROPÄISCHE PATENTANMELDUNG

(11) **EP 4 806 819 A1**
(43) Veröffentlichungstag der Anmeldung: **16.09.2026**
(21) Anmeldenummer: 26163874.6
(22) Anmeldetag: 11.03.2026
(51) Int. Cl.: B65H 19/12, B65H 19/30

(54) **GREIFERKOPF**

(30) Priorität: 12.03.2025 DE 102025109363
(71) Anmelder: Krones AG, 93073 Neutraubling (DE)
(72) Erfinder: NEUBAUER, Michael, 93073 Neutraubling (DE); WAGNER, Martin, 93073 Neutraubling (DE)
(74) Vertreter: v. Bezold & Partner Patentanwälte - PartG mbB

(57) **Zusammenfassung**

Es ist ein Greiferkopf (01) mit mindestens einer Greifvorrichtung (02) für Etikettenrollen (20) sowie mit einer Aufnahmevorrichtung (03) für flächige Zwischenlagen (30) offenbart. Die Greifvorrichtung (02) zum Erfassen der Etikettenrollen (20) ist ortsfest im Greiferkopf (01) angeordnet, während die Aufnahmevorrichtung (03) für die flächigen Zwischenlagen (30) relativ zur Position der Greifvorrichtung (02) ortsveränderlich und zwischen zwei Endlagen (A, B) in einer linearen Richtung beweglich ist.

## Beschreibung

### Technisches Gebiet

Die vorliegende Erfindung betrifft einen Greiferkopf gemäß den Merkmalen des Oberbegriffs des unabhängigen Anspruchs.

Insbesondere betrifft die Erfindung einen auch als Kombinationsgreifer bezeichenbaren Greiferkopf, beispielsweise sowohl für eine, als auch in Zusammenhang mit einer zum bedienerfreien Etikettenrollenwechsel geeigneten Vorrichtung zum Umgang mit Etikettenrollen und Zwischenablagen.

### Technischer Hintergrund

Etiketten stehen üblicherweise als auch als Etikettenrollen bezeichnet auf Rollen aufgewickelte, endlose Bahnen zur Verfügung. Bei den Etiketten kann es sich neben gewöhnlichen, auf einem Produkt oder einer Verpackung anzubringenden Etiketten beispielsweise auch um so genannte Rundum-Etiketten handeln.

Zur Verwirklichung ökonomisch effektiver Verfahrensprozesse ist ein Etikettenrollenwechsel anstrebsam, der frei von einem Eingriff von Bedienpersonal vollautomatisiert ausführbar ist.

Nach Aufbrauch einer alten, leeren Etikettenrolle wird diese hierbei vermittels einer robotergestützten Vorrichtung durch eine neue, volle Etikettenrolle ersetzt.

Die Etikettenrollen stehen wie in industriellen Prozessen üblich auf Paletten aufeinandergestapelt bereit. Dabei befinden sich in einer Stapellage einer Palette mehrere Etikettenrollen in derselben Ebene. **In** aufeinanderfolgenden Ebenen sind die Etikettenrollen üblicherweise vertikal übereinander ausgerichtet zu Türmen gestapelt. Auf einer vollen Palette stehen so mehrere Türme nebeneinander auf. Um einen störungsfreien, automatisierbaren Umgang mit vollen Paletten sicherzustellen sind in manchen Ebenen Zwischenlagen eingelegt. Diese verbinden die Türme auf einer Palette in beispielsweise regelmäßigen, einer vorgegebenen Anzahl aufeinandergestapelter Etikettenrollen entsprechenden Abständen und stabilisieren diese beim Umgang, insbesondere beim Bewegen der vollen Paletten.

Bekannt ist auch, dass sich sogar zwischen jeder Stapellage Etikettenrollen eine Zwischenlage befindet.

Diese Zwischenlagen sind oftmals aus Wellpappe, Karton oder Kunststoff gefertigt.

Zur Verwirklichung eines bedienerfreien Etikettenrollenwechsels muss nach der Abnahme der letzten Etikettenrolle von einer Zwischenlage diese bei Erreichen der entsprechenden Ebene entfernt werden. Dies hat idealerweise im störungsfreien Wechsel mit dem Abnehmen der Etikettenrollen von den Türmen zu erfolgen.

Ein eigens für den Zweck des Abnehmens von Zwischenlagen vorgesehener Roboter, der zum Zweck eines vollautomatisierbaren, bedienerfreien Etikettenrollenwechsels dann zusätzlich zu einem einen Greiferkopf zum Etikettenrollenwechsel führenden Roboter vorgesehen sein muss, birgt die Gefahr einer Kollision der beiden Roboter und ist außerdem höchst ineffizient im Hinblick auf die Auslastung zweier Roboter.

Durch DE 199 28 145 C2 ist eine Vorrichtung zum Umgang mit verschiedenen Flaschen sowie verschiedenen Gebindeformen von Flaschen bekannt. Sie umfasst eine Greifeinrichtung mit einem Kopf, der aus zwei unterschiedlichen und an eine jeweilige Gebindeform angepassten Greifern besteht, die gemeinsam an der Greifeinrichtung gehalten und im Wechsel eingesetzt werden. Zum wechselnden Einsatz der zwei Greifer kann beispielsweise der Kopf gedreht werden.

Durch WO 2023/170269 A1 ist eine Vorrichtung zum Etikettieren und zum Handhaben von Rollen aus Bahnmaterial bekannt. Die Vorrichtung umfasst einen Etikettierroboter zum Aufbringen von Etiketten auf die Rollen und einen Handhabungsroboter zum Umgang mit den Rollen. Am Kopf des Handhabungsroboters ist ein erstes Element zum Greifen und Handhaben der Rollen angeordnet, welches in die zentrale Öffnung der Rollen eingreift. Am Kopf des Handhabungsroboters kann ein zweites Element zum Greifen und Handhaben der Rollen angeordnet sein, welches die Rollen an deren Außenumfang angreift. Am Kopf des Handhabungsroboters kann außerdem ein Zwischenlagengreifer angeordnet sein. Der Zwischenlagengreifer kann Saugnäpfe umfassen, die zum Ansaugen der Zwischenlagen geeignet sind. Der Zwischenlagengreifer und das erste sowie das gegebenenfalls vorgesehene zweite Element sind entlang einer ersten Achse in entgegengesetzten Richtungen ausgerichtet auf gegenüberliegenden Seiten des Kopfs des Handhabungsroboters angeordnet. Durch Schwenken des Kopfs um 180° um eine normal auf der ersten Achse aufstehende zweite Achse kommen wahlweise: in einer ersten Drehposition das erste sowie das gegebenenfalls vorhandene zweite Element zum Eingriff mit einer Rolle, oder in einer zweiten Drehposition der Zwischenlagengreifer zur Handhabung mit einer zwischen den Rollen eingelegten oder einzulegenden Zwischenlage.

Eine Aufgabe der Erfindung ist, die Voraussetzungen für einen kostengünstigen, vollautomatisierbaren und bedienerfreien Etikettenrollenwechsel zu schaffen.

### Zusammenfassung der Erfindung

Die obige Aufgabe wird gelöst durch die Merkmale des unabhängigen Vorrichtungsanspruchs. Vorteilhafte Ausführungsformen sind in den Ansprüchen, den Zeichnungen sowie in der nachfolgenden Beschreibung, einschließlich der zu den Zeichnungen zugehörigen, wiedergegeben.

Zusätzliche, über eine vollständige Lösung der der Erfindung zu Grunde liegenden Aufgabe hinausgehende Vorteile gegenüber dem Stand der Technik ergeben sich durch ein Greifen der Zwischenlagen mit dem gleichen Greiferkopf, mit dem auch die Etikettenrollen gegriffen und von der Palette abgehoben werden. Insbesondere kann hierdurch im Vergleich zum Stand der Technik sowohl ein unnötiger Werkzeugwechsel an einem den als Kombinationsgreifer bezeichenbaren Greiferkopf tragenden Roboter vermieden werden, als auch auf einen zum manuellen Entfernen der Zwischenlagen von der die Etikettenrollen bereitstellenden Palette notwendigen Bedienereingriff verzichtet werden.

Hierdurch erst werden die Voraussetzungen für einen vollautomatisierbaren Etikettenrollenwechsel geschaffen.

Besonders hervorzuhebende Vorteile sind außerdem:
- Eine Verwirklichung eines prozesssicheren Entfernens der Zwischenlagen von Packmittelpaletten durch einen Roboter.
- Eine modulare Ausgestaltungsmöglichkeit, wonach der Zwischenlagengreifer modular an einen den Hauptgreifer bildenden Etikettenrollengreifer anbaubar ist.
- Die bevorzugt als kurz als Aufnahmemittel bezeichneten Mittel zur Aufnahme von Zwischenlagen des Zwischenlagengreifers vorgesehenen, vorzugsweise als Unterdruck- oder Vakuumsauger ausgebildeten Saugglocken sind so verfahrbar, dass sie in der eingefahrenen Stellung nicht mit den aufzunehmenden Etikettenrollen kollidieren. Dies ermöglicht zum einen eine prozesssichere Aufnahme der Etikettenrollen. Andererseits sind die Vakuumsauger durch das Zurückziehen/Einfahren vor mechanischer Beschädigung geschützt. In der ausgefahrenen Stellung sind die Sauger so platziert, dass die Zwischenlagen aufgenommen werden können, ohne dass sie mit den Bauteilen des Hauptgreifers in Kontakt kommen.
- Die Zwischenlagen können nach dem Abheben flach abgelegt werden. Alternativ können sie in eine Presse oder in einen Schredder eingegeben werden oder in im Wesentlichen senkrechter Ausrichtung auf eine entsprechende Vorrichtung aufgespießt werden.

### Kurzbeschreibung der Figuren

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar, wobei die Figuren nachfolgend jeweils unterschiedliche Details in schematischen Darstellungen zeigen.

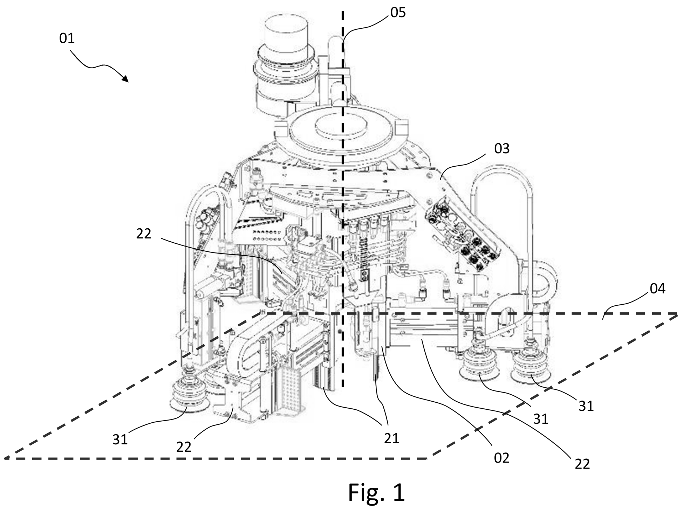

Fig. 1 zeigt ein Ausführungsbeispiel eines Greiferkopfs mit einer kurz als Etikettenrollengreifer bezeichneten Greifvorrichtung für Etikettenrollen und mit einer kurz als Zwischenlagengreifer bezeichneten Aufnahmevorrichtung für flächige Zwischenlagen in perspektivischer Ansicht.

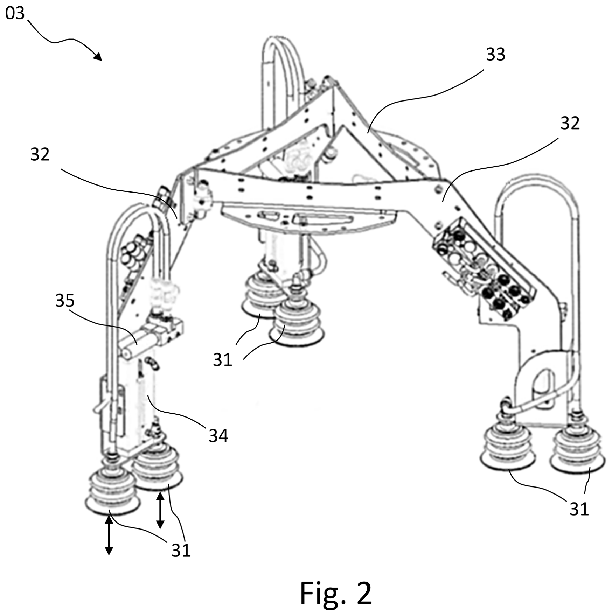

Fig. 2 zeigt ein Ausführungsbeispiel einer an einem Greiferkopf mit einer Greifvorrichtung für Etikettenrollen oder an einem Etikettenrollengreifer nachrüstbaren, auch als Zwischenlagengreifer bezeichenbaren Aufnahmevorrichtung für flächige Zwischenlagen in perspektivischer Ansicht.

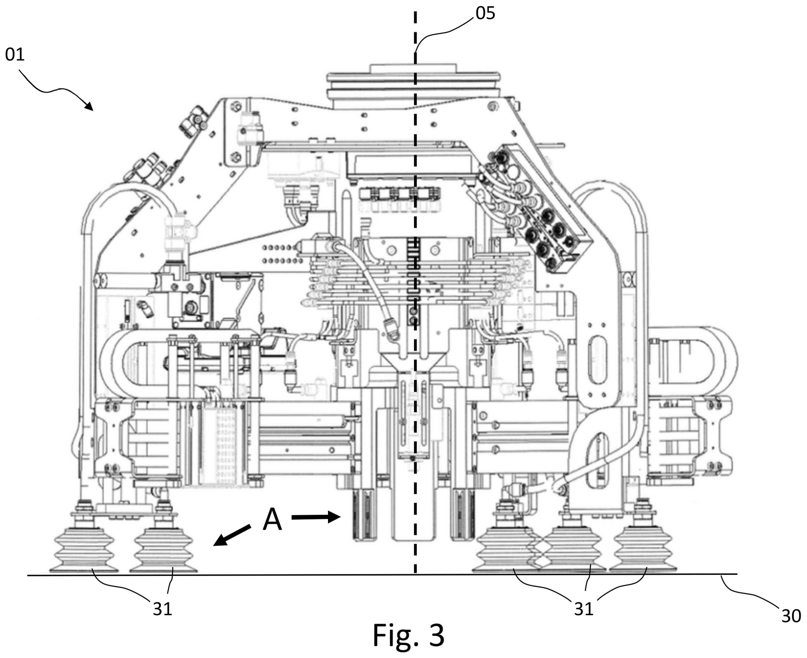

Fig. 3 zeigt den Greiferkopf aus Fig. 1 in einer ersten Arbeitsstellung, die einer ersten Endposition A entspricht, bei der der Zwischenlagengreifer gegenüber der Greifvorrichtung für Etikettenrollen entlang einer Geometrieachse des Greiferkopfs gesehen hervorgeschoben ist, um den Zwischenlagengreifer mit seinen bevorzugt als Saugglocken ausgebildeten Aufnahmemitteln in eine günstige Stellung zur An- oder Auflage auf eine Zwischenablage zu bringen, ohne durch den Eingriffsbereich der Greifvorrichtung für Etikettenrollen eingeschränkt zu sein, in einer Seitenansicht.

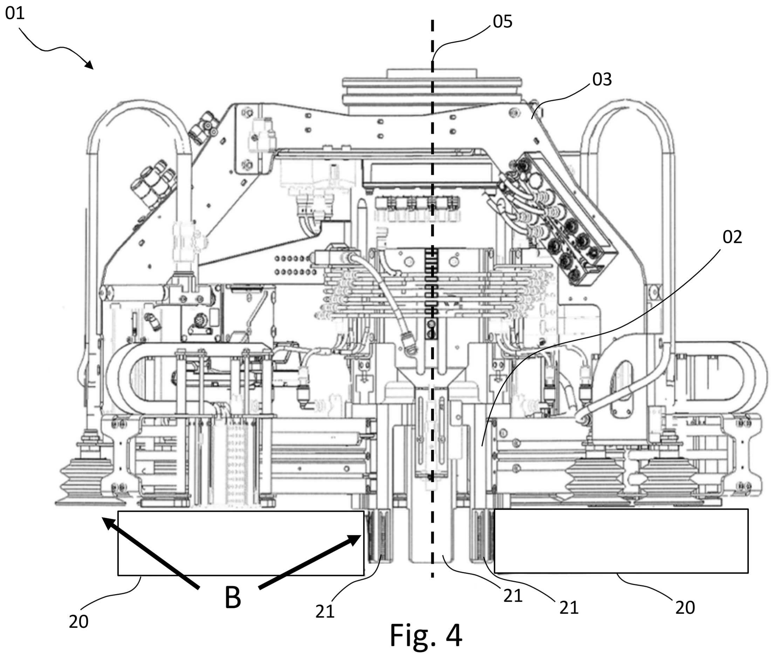

Fig. 4 zeigt den Greiferkopf aus Fig. 1 in einer zweiten Arbeitsstellung, die einer zweiten Endposition B entspricht, bei der der Zwischenlagengreifer gegenüber der Greifvorrichtung für Etikettenrollen entlang einer Geometrieachse des Greiferkopfs gesehen zurückgezogen ist, um der Greifvorrichtung für Etikettenrollen einen Eingriffsbereich für Etikettenrollen freizugeben, in einer Seitenansicht.

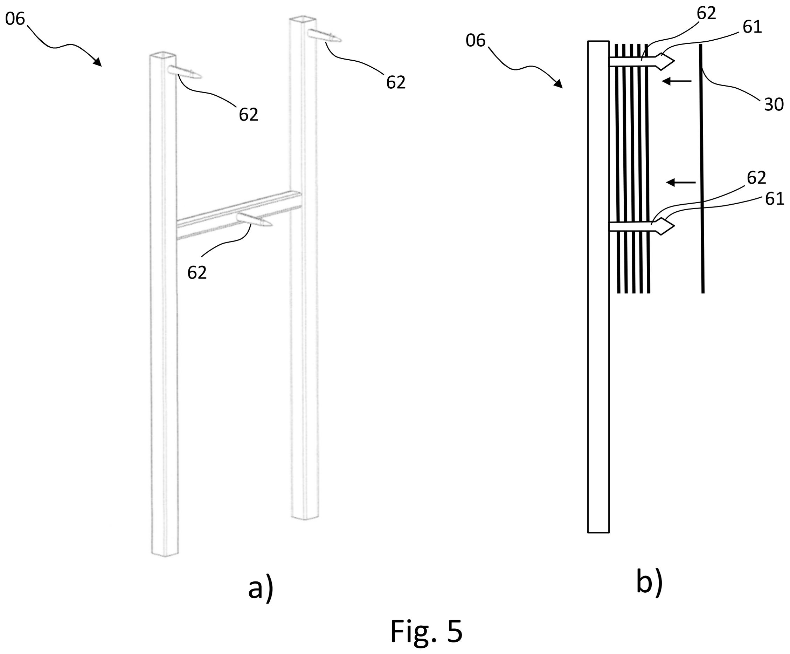

Fig. 5 zeigt ein Ausführungsbeispiel eines Magazins zur Ablage von einer Palette mit Etikettenrollen abgehobener Zwischenlagen in perspektivischer Ansicht in Fig. 5 a) und mit darauf aufgespießten Zwischenablagen in einer Seitenansicht in Fig. 5 b), welches Magazin Teil eines Greiferkopfs mit mindestens einer Greifvorrichtung für Etikettenrollen sowie mit einer Aufnahmevorrichtung für flächige Zwischenlagen oder einer einen solchen Greiferkopf umfassenden Vorrichtung zum Umgang mit Etikettenrollen und Zwischenablagen sein kann.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie der erfindungsgemäße Greiferkopf ausgestaltet sein kann und stellen keine abschließende Begrenzung dar.

### Detaillierte Beschreibung beispielhafter Ausführungsformen

Ein in den Figuren 1, 2, 3, 4 und in Fig. 5 ganz oder in Teilen dargestellter Greiferkopf 01 ist mit mindestens einer Greifvorrichtung 02 für Etikettenrollen 20 sowie mit einer Aufnahmevorrichtung 03 für flächige Zwischenlagen 30 ausgestattet.

Die Greifvorrichtung 02 zum Erfassen der Etikettenrollen 20 kann vorteilhaft ortsfest im Greiferkopf angeordnet sein. Die Aufnahmevorrichtung 03 für die flächigen Zwischenlagen 30 ist relativ zur Position der Greifvorrichtung 02 ortsveränderlich und zwischen zwei beispielhaft in Fig. 3 und Fig. 4 dargestellten Endlagen A, B in einer linearen Richtung beweglich.

Mit anderen Worten ist bei dem Greiferkopf 01 die kurz auch als Zwischenlagengreifer bezeichnete Aufnahmevorrichtung 03 für flächige Zwischenlagen 30 gegenüber der auch als Etikettenrollengreifer bezeichenbaren Greifvorrichtung 02 zum Erfassen der Etikettenrollen 20 linear verfahrbar.

Grundsätzlich kann jedoch auch eine lineare Verfahrbarkeit des Etikettenrollengreifers gegenüber dem Zwischenlagengreifer vorgesehen sein.

Als vorteilhaft ist eine relative Verfahrbarkeit des Etikettenrollengreifers zum Zwischenlagengreifer hervorzuheben.

Die Fig. 3 zeigt den Greiferkopf 01 mit mindestens einer Greifvorrichtung 02 für Etikettenrollen 20 sowie mit einer Aufnahmevorrichtung 03 für flächige Zwischenlagen 30 in der ersten Endlage A der ortsveränderlich und zwischen zwei beispielhaft in Fig. 3 und Fig. 4 dargestellten Endlagen A, B in einer linearen Richtung relativ zur Position der Greifvorrichtung 02 beweglichen Aufnahmevorrichtung 03 für die flächigen Zwischenlagen 30.

**In** einer kurz als erste Linearposition des Zwischenlagengreifers relativ zum Etikettenrollengreifer bezeichneten ersten Endlage A der ortsveränderlichen Beweglichkeit der Aufnahmevorrichtung 03 für die flächigen Zwischenlagen 30 relativ zur Position der Greifvorrichtung 02 in linearer Richtung dient der auch als Kombinationsgreifer oder auch kurz nur als Greifer bezeichenbare Greiferkopf 01 dem Umgang mit Zwischenlagen 30. Beispielsweise dient der Greiferkopf 01 in der ersten Linearposition des Zwischenlagengreifers relativ zum Etikettenrollengreifer dem Abheben von zwischen aufeinanderfolgenden Stapellagen von vertikal übereinander ausgerichtet zu mehreren nebeneinander auf einer Palette aufstehenden Türmen gestapelten Etikettenrollen mittels des Zwischenlagengreifers.

Die Fig. 4 zeigt den Greiferkopf 01 mit mindestens einer Greifvorrichtung 02 für Etikettenrollen 20 sowie mit einer Aufnahmevorrichtung 03 für flächige Zwischenlagen 30 in der zweiten Endlage B der ortsveränderlich und zwischen zwei beispielhaft in Fig. 3 und Fig. 4 dargestellten Endlagen A, B in einer linearen Richtung relativ zur Position der Greifvorrichtung 02 beweglichen Aufnahmevorrichtung 03 für die flächigen Zwischenlagen 30.

In einer kurz als zweite Linearposition des Zwischenlagengreifers relativ zum Etikettenrollengreifer bezeichneten zweiten Endlage B der ortsveränderlichen Beweglichkeit der Aufnahmevorrichtung 03 für die flächigen Zwischenlagen 30 relativ zur Position der Greifvorrichtung 02 in linearer Richtung dient der Kombinationsgreifer beziehungsweise Greiferkopf 01 dem Umgang mit Etikettenrollen 20. Beispielsweise dient der Greiferkopf 01 in der zweiten Linearposition des Zwischenlagengreifers relativ zum Etikettenrollengreifer dem Abheben von vertikal übereinander ausgerichtet zu mehreren nebeneinander auf einer Palette aufstehenden Türmen gestapelten Etikettenrollen 20 mittels des Etikettenrollengreifers. In der zweiten Linearposition kann der Etikettenrollengreifer dem gleichzeitigen Abheben mehrerer Etikettenrollen 20 in einer oder in aufeinanderfolgenden Stapellagen, oder dem Abheben einer Etikettenrolle nach der anderen vom selben oder von verschiedenen Türmen von Etikettenrollen 20 dienen, vorausgesetzt zwischen aufeinanderfolgenden Stapellagen befindet sich keine Zwischenlage 30. Sobald eine Zwischenlage 30 erreicht ist, muss diese erst durch Abheben der darauf befindlichen Etikettenrollen 20 komplett leergeräumt werden, um durch Entfernen der Zwischenlage in der ersten Linearposition des Zwischenlagengreifers relativ zum Etikettenrollengreifer die darunter liegenden Etikettenrollen 20 zugänglich zu machen.

Der Greiferkopf 01 ist demzufolge in der Lage, durch Einnahme zweier unterschiedlicher Endlagen A, B seiner in linearer Richtung relativ zu seiner Greifvorrichtung 02 für Etikettenrollen 20 ortsveränderlicher Aufnahmevorrichtung 03 für flächige Zwischenlagen 30 wahlweise Zwischenlagen 30 oder Etikettenrollen 20 in schnellem Wechsel aufzunehmen und abzulegen. Dies geschieht frei von einer Neuausrichtung des Greiferkopfs 01, da zum Wechsel zwischen Zwischenlagen 30 und Etikettenrollen 20 lediglich zwischen zwei auch als Relativpositionen bezeichenbaren Linearpositionen des Zwischenlagengreifers in Bezug auf den vorteilhaft ortsfest im Greiferkopf 01 angeordneten Etikettenrollengreifer hin und her gewechselt wird. Dabei befindet sich der Zwischenlagengreifer in einer der beiden Linearpositionen vorteilhaft einmal vor einen Eingriffsbereich des Etikettenrollengreifers, wohingegen er in der verbleibenden Linearposition hinter den Eingriffsbereich des Etikettenrollengreifers zurückgezogen ist. Dadurch kann der Zwischenlagengreifer in der einen der beiden Linearpositionen eine Zwischenlage 30 aufnehmen, ohne dass der Etikettenrollengreifer auf die Zwischenlage 30 prallt. In der verbleibenden der beiden Linearpositionen ist der Etikettenrollengreifer in Eingriff mit einer oder mehreren Etikettenrollen 20 bringbar, ohne dass der Zwischenlagengreifer gegen die Etikettenrolle 20 stößt.

Durch die ortsveränderliche Beweglichkeit der Aufnahmevorrichtung 03 für die flächigen Zwischenlagen 30 in linearer Richtung relativ zur Position der Greifvorrichtung 02 für Etikettenrollen 20 gelangt die Aufnahmevorrichtung 03 wahlweise vor oder hinter den Eingriffsbereich der Greifvorrichtung 02.

Der Greiferkopf 01 zeichnet sich hiernach durch eine lineare Verfahrbarkeit der Aufnahmevorrichtung 03 für flächige Zwischenlagen 30 gegenüber der Greifvorrichtung 02 zum Erfassen der Etikettenrollen 20 aus. Beispielsweise kann die Aufnahmevorrichtung 03 für flächige Zwischenlagen 30 entlang einer beispielsweise zentralen, normal auf einer Greiferebene 04 aufstehenden, beispielsweise vertikalen Geometrieachse 05 des Greiferkopfs 01 linear gegenüber der Greifvorrichtung 02 zum Erfassen der Etikettenrollen 20 verfahrbar sein.

Vorteilhaft ist die Aufnahmevorrichtung 03 für flächige Zwischenlagen 30 gegenüber der Greifvorrichtung 02 für Etikettenrollen 20 ortsveränderlich zumindest zwischen zwei in Fig. 3 und Fig. 4 dargestellten Endlagen A, B in einer linearen Richtung entlang einer beispielsweise zentralen, normal auf einer Greiferebene 04 aufstehenden, beispielsweise vertikalen Geometrieachse 05 des Greiferkopfs 01 beweglich. Dies schließt die Möglichkeit der Einnahme weiterer Relativpositionen zwischen den beiden Endlagen A, B nicht aus. So können die weiteren Relativpositionen an verschiedene Abmessungen unterschiedlicher Etikettenrollen entlang der Geometrieachse 05 angepasst sein. Die Endlagen A, B können beispielsweise eine maximale Abmessung einer aufnehmbaren Etikettenrolle entlang der Geometrieachse 05 vorgeben. Eine oder mehrere weitere Relativpositionen können dünneren Etikettenrollen zugeordnet sein, i.e. solchen mit geringeren Abmessungen entlang der Geometrieachse 05 des Greiferkopfs 01 gesehen.

Der Greiferkopf 01 kann eine automatisiert steuerbare Betätigungsvorrichtung mit mindestens einem Betätigungsmittel 34 zur kurz als Linearverschiebung bezeichneten ortsveränderlichen Bewegung der Aufnahmevorrichtung 03 für die flächigen Zwischenlagen 30 mindestens zwischen zwei Endlagen A, B in einer linearen Richtung relativ zur Position der vorteilhaft ortsfest im Greiferkopf 01 angeordneten Greifvorrichtung 02 für Etikettenrollen 20 umfassen.

Die Aufnahmevorrichtung 03 für flächige Zwischenlagen 30 kann eine oder mehrere auch als Saugnäpfe, Saugtulpen oder Saugköpfe bezeichnete Saugglocken 31 als kurz auch als Aufnahmemittel bezeichnete Mittel zur Aufnahme von Zwischenlagen 30 umfassen, um Zwischenlagen 30 zu erfassen und aufzunehmen beziehungsweise von einer Etikettenrollen 20 bereitstellenden Palette abzuheben.

Eine solche Aufnahmevorrichtung 03 wird nachfolgend auch als Saugereinheit bezeichnet.

Vorteilhaft kann die Saugereinheit als an einem Etikettenrollengreifer nachrüstbar ausgebildet sein.

Wie bereits erwähnt kann die Aufnahmevorrichtung 03 für flächige Zwischenlagen 30 relativ zur Greifvorrichtung 02 für Etikettenrollen 20 entlang einer beispielsweise zentralen, normal auf einer Greiferebene 04 aufstehenden, beispielsweise vertikalen Geometrieachse 05 des Greiferkopfs 01 linear verfahrbar sein. Parallel zur so genannten Greiferebene 04 können die Etikettenrollen 20 von deren Innen- und/oder Außenumfang gegriffen werden. Beispielsweise kann die Greifvorrichtung 02 für Etikettenrollen 20 vorteilhaft parallel zur Greiferebene 04 bewegliche Elemente 21 aufweisen, welche durch Auseinanderfahren weg von der normal auf der Greiferebene 04 aufstehenden, kurz als Greiferachse bezeichneten Geometrieachse 05 des Greiferkopfs 01 die Etikettenrollen 20 von deren Innenumfang her zu greifen in der Lage sind. Alternativ oder zusätzlich kann die Greifvorrichtung 02 für Etikettenrollen 20 vorteilhaft parallel zur Greiferebene 04 bewegliche Elemente aufweisen, die durch Zusammenfahren hin zu der Greiferachse die Etikettenrollen 20 von deren Außenumfang her zu greifen in der Lage sind.

Die Ober- und Unterseiten einer vom Etikettenrollengreifer des Greiferkopfs 01 aufgenommenen Etikettenrolle 20 erstrecken sich parallel zur Greiferebene 04. Die Wickelachse einer vom Greiferkopf 01 aufgenommenen Etikettenrolle 20 steht normal auf der Greiferebene 04 auf. Sie verläuft parallel zur Geometrieachse 05 des Greifers. Sie kann mit der Geometrieachse 05 übereinstimmen (Fig. 4).

Der Etikettenrollengreifer kann einen Eingriffsbereich aufweisen, der nötig ist, um eine Etikettenrolle 20 von oben her kommend innen und/oder außen zu passieren, um diese an deren Innen- und/oder Außenumfang zu packen, beispielsweise zu klemmen und/oder zu hintergreifen. Dies ist erst möglich, wenn entsprechende bewegliche Elemente 21 des Etikettenrollengreifers von oben her kommend über eine Oberkante einer Etikettenrolle 20 hinabgesenkt worden sind. Der Eingriffsbereich kann definiert sein durch einen zwischen zwei parallel zur Greiferebene 04 verlaufenden und beispielsweise um die Erstreckung der beweglichen Elemente 21 entlang der Geometrieachse 05 beabstandeten Ebenen eingeschlossenen und von einem vorgegebenen, beispielsweise einem Etikettenrollendurchmesser proportionalen Radius um die Geometrieachse 05 radial begrenzten Raum.

Der Zwischenlagengreifer befindet sich während des Umgangs mit einer Etikettenrolle 20 vorteilhaft entlang der Geometrieachse 05 gesehen oberhalb des Eingriffsbereichs, um eine Kollision mit der Etikettenrolle auszuschließen.

Erst zum Umgang mit einer Zwischenlage 30 taucht der Zwischenlagengreifer mit seinen beispielsweise als Saugglocken 31 ausgeführten, auch als Aufnahmemittel bezeichneten Mitteln zur Aufnahme von Zwischenlagen 30 in den Eingriffsbereich des Etikettenrollengreifers hinab, der zum Umgang mit einer Zwischenlage 30 vorteilhaft frei von einer Etikettenrolle 20 ist, es dort also nicht zu einer Kollision der Aufnahmemittel mit der Etikettenrolle 20 kommen kann.

Gemäß einer vorteilhaften Ausgestaltung eines Greiferkopfs 01 kann die kurz als Etikettenrollengreifer bezeichnete Greifvorrichtung 02 für Etikettenrollen 20 eine zentrale, normal auf einer Greiferebene 04 aufstehende, beispielsweise vertikale Geometrieachse 05, und mindestens zwei gleichmäßig um die Geometrieachse 05 verteilt beispielsweise sternförmig radial von der Geometrieachse 05 abstehend angeordnete, beispielsweise parallel zur Greiferebene 04 aufeinander zu und voneinander weg beweglich und zum Packen einer mit ihrer Wickelachse parallel zur Geometrieachse 05 ausgerichteten Etikettenrolle 20 an deren Innen- und/oder Außenumfang beispielsweise durch klemmen und/oder hintergreifen ausgebildeten Etikettenrollengreiferarme 22 umfassen.

Insbesondere bei einem solchen Greiferkopf 01 kann die kurz als Zwischenlagengreifer bezeichnete Aufnahmevorrichtung 03 für flächige Zwischenlagen 30 mindestens einen, vorzugsweise mindestens eine der Zahl der Etikettenrollengreiferarme 22 entsprechende Anzahl von beispielsweise als Zwischenlagensaugerarme ausgeführten Zwischenlagenaufnahmearmen 32 in einer Umfangsrichtung um die Geometrieachse 05 gesehen gleichmäßig um die Geometrieachse 05 verteilt zwischen den Etikettenrollengreiferarmen 22 gemeinsam relativ zu diesen parallel zur Geometrieachse 05 (i.e. normal zur Greiferebene 04) beweglich und radial zu dieser beabstandet umfassen.

An der kurz als Etikettenrollengreifer bezeichneten Greifvorrichtung 03 für beziehungsweise zum Erfassen der Etikettenrollen 30 ist hiernach vorzugsweise mindestens ein Zwischenlagenaufnahmearm 22, vorzugsweise jedoch mindestens eine der Zahl der Etikettenrollengreiferarme 32 entsprechende Anzahl von beispielsweise als Zwischenlagensaugerarme ausgeführten Zwischenlagenaufnahmearmen 22 in einer Umfangsrichtung um die Geometrieachse 05 gesehen gleichmäßig um die Geometrieachse 05 verteilt zwischen den Etikettenrollengreiferarmen 22 gemeinsam relativ zu diesen parallel zur Geometrieachse 05 und somit normal zur Greiferebene 04 beweglich und radial zur Geometrieachse 05 beabstandet angeordnet.

An jedem Zwischenlagenaufnahmearm 32 eines derart ausgebildeten Greiferkopfs 01 können mehrere Saugglocken 31 angeordnet sein.

Die Zwischenlagenaufnahmearme 32 können zu einem gemeinsamen, parallel zur Geometrieachse 05 verschiebbar am Etikettenrollengreifer 02 angeordneten Zwischenlagenaufnahmeelement 33 miteinander verbunden sein.

Das Zwischenlagenaufnahmeelement 33 oder wahlweise die dieses umfassende oder von diesem umfasste Aufnahmevorrichtung 03 für flächige Zwischenlagen 30 kann vorteilhaft zur bedarfsgerechten, gegebenenfalls modularen Nachrüstung nachträglich an dem Etikettenrollengreifer 02 anordbar und auch wieder entfernbar sein.

Hierdurch kann der erfindungsgemäße Greiferkopf 01 bedarfsgerecht modular hergestellt werden.

Zwischen der Greifvorrichtung 02 für Etikettenrollen 20 und der Aufnahmevorrichtung 03 für flächige Zwischenlagen 30 des Greiferkopfs 01, beispielsweise zwischen dem Etikettenrollengreifer und den Zwischenlagengreiferbeziehungsweise Zwischenlagenaufnahmearmen 32, kann mindestens ein eine beispielsweise gemeinsame Bewegung zwischen den zwei Endlagen in der linearen Richtung, beispielsweise eine Bewegung der Zwischenlagenaufnahmearme 32 relativ zu den Etikettenrollengreiferarmen 22 parallel zur Geometrieachse 05 steuerndes Betätigungsmittel 34 angeordnet sein. Ein solches Betätigungsmittel 34 kann beispielsweise durch einen oder mehrere Pneumatikzylinder verwirklicht sein.

Der Greiferkopf 01 kann zwischen mindestens einer Etikettenrolle 20 und einer Zwischenlage 30 unterscheidende Erkennungsmittel umfassen. Die Erkennungsmittel erlauben vorteilhaft nicht nur eine Erkennung, sondern bevorzugt auch eine Unterscheidung zwischen mindestens einer Etikettenrolle 20 und einer Zwischenlage 30.

Der Greiferkopf 01 kann alternativ oder zusätzlich Mittel zur Erfassung eines Abstands zumindest zu mindestens einer Etikettenrolle 20 und/oder zu mindestens einer Zwischenlage 30 umfassen.

Diese Mittel zur Erfassung eines Abstands können berührungslos als beispielsweise optischer und/oder akustischer Sensor ausgeführt, oder als Taster oder Kontaktschalter ausgebildet sein oder solche Sensoren oder Taster oder Kombinationen hiervon umfassen, beispielsweise Ultraschallsensoren.

Besonders vorteilhaft können als Distanzsensor ausgebildete Mittel zur Erfassung eines Abstands der bevorzugt als Saugereinheit ausgebildeten Aufnahmevorrichtung 03 für flächige Zwischenlagen 30 zugeordnet sein. Dadurch kann eine unabhängig von an einem Greiferkopf ggf. angeordneten Distanzsensoren nachrüst- oder auswechselbar anordbare Saugereinheit geschaffen werden.

Wie bereits erwähnt kann der Greiferkopf 01 mit einer Greifvorrichtung 02 für Etikettenrollen 20 ausgebildet sein, welche Mittel zum Greifen der Etikettenrollen 20 von deren Außenumfang her umfasst.

Alternativ oder zusätzlich kann der Greiferkopf 01 mit einer Greifvorrichtung 02 für Etikettenrollen 20 ausgebildet sein, welche Mittel zum Greifen der Etikettenrollen 20 von deren Innenumfang her umfasst. Mittel zum Greifen der Etikettenrollen 20 von deren Innenumfang her können durch bereits zuvor beschriebene bewegliche Elemente 21 verwirklicht sein.

Eine Kombination des Greifens beziehungsweise Erfassens einer Etikettenrolle 20 sowohl von deren Innen-, als auch von deren Außenumfang her kann insbesondere bei sehr großen Etikettenrollen 20 oder Etikettenrollen 20 mit rutschigem Etikettenmaterial von Vorteil sein. Etikettenrollen weisen typischerweise innen einen Kern aus Pappe oder Kunststoff auf. Hier erfolgt bevorzugt eine primäre Aufnahme vom Innenumfang der Etikettenrolle 20 her, beispielsweise mittels der kurz auch als so genannter Innengreifer bezeichneten Mittel zum Greifen der Etikettenrollen 20 von deren Innenumfang her, da hier eine große Kraft aufgebracht werden kann ohne das empfindliche Etikettenband zu beschädigen. Die Außenseite der Rolle hingegen ist relativ empfindlich, beispielsweise fragil, besonders wenn die Rolle nicht straff gewickelt wurde. Deshalb neigen mache Rollen zum Teleskopieren, wenn sie nur von deren Innenumfang her aufgenommen werden.

Dies kann verhindert werden durch eine zusätzliche Klemmung der Etikettenrollen 20 vom Außenumfang her, beispielsweise mittels der kurz auch als so genannter Außengreifer bezeichneten Mittel zum Greifen der Etikettenrollen 20 von deren Außenumfang her. Ein weiterer Vorteil einer Verwendung eines Außengreifers ist, dass dieser auch den Umgang mit angebrochenen Rollen erlaubt. Hier ist der Bandanfang lose. Ohne Außengreifer würde sich die Rolle beim Umgang, insbesondere Umsetzen oder Transport, abwickeln.

Der Greiferkopf 01 kann eine Vakuumquelle 35 für die bevorzugt als Saugereinheit ausgebildete Aufnahmevorrichtung 03 für flächige Zwischenlagen 30 umfassen. Eine solche Vakuumquelle 35 kann beispielsweise durch eine oder mehrere Venturidüsen verwirklicht sein oder eine oder mehrere Venturidüsen umfassen.

Gemäß einer besonders vorteilhaften Ausgestaltung kann der Greiferkopf 01 ein diesem zugeordnetes Magazin 06 mit vorzugsweise mit Widerhaken 61 an deren freien Enden versehenen, auch als Haltedorne bezeichneten Aufnahmedornen 62 zur Ablage abgehobener Zwischenlagen 30 umfassen.

Der Greiferkopf 01 kann einen durch die beweglichen Elemente 21 gebildeten, diese umfassenden oder von diesen umfassten mehrteiligen Zentrierabschnitt aufweisen, der in eine zentrale Öffnung einer Etikettenrolle 20 einfahrbar ist und von einer beispielsweise mit der geometrischen Mitte der zentralen Öffnung in Übereinstimmung bringbaren Mittelposition ausgehend unter Zentrierung einer Etikettenrolle 20 radial weitbar ist.

Wichtig ist hervorzuheben, dass eine Ansteuerung der linearen Verfahrbewegung des Zwischenlagengreifers relativ zum Etikettenrollengreifer beispielsweise elektromotorisch oder pneumatisch erfolgen kann.

Sofern die kurz auch als Aufnahmemittel bezeichneten Mittel zur Aufnahme von Zwischenlagen 30 der Aufnahmevorrichtung 03 für flächige Zwischenlagen 30 innerhalb der Greiferebene 04 gesehen eine vom Etikettenrollengreifer gegriffene Etikettenrolle 20 radial in Bezug auf eine beispielsweise gemeinsame und mit der Wickelachse der Etikettenrolle 20 übereinstimmende Geometrieachse 05 überragen, ist auch ein gleichzeitiges Abheben beispielsweise der letzten auf einer Zwischenablage 30 aufliegenden Etikettenrolle 20 gemeinsam mit der darunter liegenden Zwischenablage 30 möglich.

Ebenfalls wichtig ist hervorzuheben, dass die Erfindung durch eine Vorrichtung zum Umgang sowohl mit Etikettenrollen, als auch mit Zwischenablagen verwirklicht sein kann, welche einen voranstehend in verschiedenen Ausgestaltungsmöglichkeiten und Ausführungsbeispielen beschriebenen Greiferkopf 01 umfasst, der vorteilhaft an einem Roboter, beispielsweise einem Industrieroboter oder einem Roboterarm angeordnet und von diesem innerhalb eines Raumbereichs bewegbar sein kann. Eine solche Vorrichtung kann ein Magazin 06 mit vorzugsweise mit Widerhaken 61 an deren freien Enden versehenen, auch als Haltedorne bezeichneten Aufnahmedornen 62 zur Ablage vermittels des Greiferkopfs 01 abgehobener Zwischenlagen 30 aufweisen.

Eine Vakuum- beziehungsweise Unterdruckversorgung von als Saugglocken 31 ausgeführten, auch als Aufnahmemittel bezeichneten Mitteln zur Aufnahme von Zwischenlagen 30 kann vermittels eines Radialgebläses, einer Vakuumpumpe oder einer Venturidüse beziehungsweise eines so genannten Ejektors erfolgen.

Wie in Fig. 1, Fig. 2, Fig. 3, Fig. 4 erkennbar, kann die Aufnahmevorrichtung 03 eine Vielzahl von auch als Vakuumsauger bezeichneten Saugglocken 31 als Aufnahmemittel umfassen, mit denen die Zwischenlagen 30 angesaugt und von der Palette abgehoben werden. Um eine Kollision mit den Etikettenrollen 20 zu vermeiden, sind die Vakuumsauger linear verfahrbar gelagert. Wenn der Greiferkopf 01 Etikettenrollen 20 abheben soll, sind die Vakuumsauger eingefahren, also in der in Fig. 4 dargestellten, als Endlage B bezeichneten oberen Stellung befindlich. Etikettenrollen 20 können somit kollisionsfrei mit den beispielsweise durch drei Klemmbacken verwirklichten beweglichen Elementen 21 an der Unterseite aufgenommen werden. Um Zwischenlagen 30 abheben zu können, werden die Vakuumsauger in die in Fig. 3 dargestellte, als Endlage A bezeichnete untere Stellung gebracht. In dieser Position überragen sie die Klemmbacken des Etikettenrollengreifers und sind somit in der Lage die Zwischenlagen 30 von der Palette aufzunehmen. Die lineare Verfahrbewegung der Vakuumsauger wird vorzugsweise pneumatisch angesteuert. Ebenfalls denkbar ist eine elektrische Aktuierung.

Am Greiferkopf 01, beispielsweise am Etikettenrollengreifer befindet sich vorteilhaft eine Kamera zum Erkennen der Rollenkerne zum Aufnehmen der Etikettenrollen 20 mittels des auch als Zentrischgreifer bezeichenbaren Etikettenrollengreifers. Diese Kamera kann auch dazu verwendet werden, um das Vorhandensein einer abnehmbaren Zwischenlage 30 zu detektieren.

Zur Ermittlung des Abstandes der Vakuumsauger von der aufzunehmenden Zwischenlage 30 können die am als Hauptgreifer des Greiferkopfs 01 ausgebildeten Etikettenrollengreifer vorgesehenen Distanzsensoren verwendet werden. Somit kann sich der Roboter zielgerichtet der Zwischenlage 30 nähern, ohne dass die Gefahr der Beschädigung für die Vakuumsauger besteht.

Bevorzugt werden die Venturidüsen, die die Vakuumsauger mit Vakuum versorgen, über eine permanente Druckluftversorgung mit Druckluft versorgt. So kann sichergestellt werden, dass auch bei einem Not-Halt der Maschine oder einer Öffnung des Schutzbereiches, die Zwischenlagen 30 sicher an den Vakuumsaugern gehalten werden. Ein unkontrolliertes Herunterfallen der Zwischenlage 30 wird so vermieden. Nach Wiederaufnahme des Betriebes kann die Zwischenlage 30 kontrolliert abgelegt und der Prozess nahtlos fortgesetzt werden.

Die Erzeugung des Vakuums für die Vakuumsauger geschieht bevorzugt in der Nähe der Sauger mittels Venturidüsen.

Die von den Paletten abgehobenen Zwischenlagen 30 werden im einfachsten Fall an einem anderen Ort abgelegt und dort gestapelt.

Die dort gestapelten Zwischenlagen 30 können bei Gelegenheit wieder mit dem Greiferkopf 01 auf eine bereitstehende, leere Palette transferiert werden, welche dann beispielsweise mittels eines Hubwagens von einem Bediener oder automatisiert mittels so genanntem AGV oder mobilem Roboter wieder aus der Roboterzelle gefahren wird.

Um ein prozesssicheres Ablegen der abgehobenen Zwischenlagen 30 zu verwirklichen, kann es vorgesehen sein, dass die Vakuumgreifer beim Ablegen der Zwischenlagen 30 kurzzeitig mit Druckluft beaufschlagt werden. Durch dieses so genannte Gegenblasen können die Zwischenlagen 30 von den Vakuumsaugern abgedrückt werden.

Neben dem ebenen Ablegen ist es auch denkbar, dass der Roboter die abgehobenen Zwischenlagen 30 einer Presse oder einem Schredder zuführt.

Für eine platzsparende Zwischenlagerung der abgehobenen Zwischenlagen 30 bietet sich auch noch ein anderes Vorgehen an: Die Zwischenlagen 30 können wie bereits zum Magazin 06 beschrieben auf kurz Dorne bezeichnete Aufnahmedorne 62 aufgespießt werden, so dass sie in senkrechter Ausrichtung gelagert werden können. Dies hat den Vorteil, dass viele Zwischenlagen 30 auf einer sehr kleinen Grundfläche gelagert werden können. Ebenso wird nur wenig Hallenboden verbaut oder verbraucht, da sich die aufgespießten Zwischenlagen 30 auch in einer gewissen Höhe über dem Boden befinden können.

Der Greiferkopf 01 drückt die Zwischenlagen 30 in senkrechter Ausrichtung auf die beiden Dorne, wobei die Anzahl der vorgesehenen Dorne variieren kann. Widerhaken 61 an den Dornen verhindern ein Herunterfallen der Zwischenlagen.

Es ist ersichtlich, dass die Erfindung durch eine als einen voranstehend beschriebenen Greiferkopf 01 verwirklichte oder einen solchen umfassende Vorrichtung zum Umgang mit Etikettenrollen 20 und Zwischenablagen 30 verwirklicht sein kann, beispielsweise umfassend einen Etikettenrollengreifer mit einer zentralen, normal auf einer Greiferebene 04 aufstehenden, beispielsweise vertikalen Geometrieachse 05, und mindestens zwei gleichmäßig um die Geometrieachse 05 verteilt beispielsweise sternförmig radial von der Geometrieachse 05 abstehend angeordneten, beispielsweise parallel zur Greiferebene 04 aufeinander zu und voneinander weg beweglich und zum Packen einer mit ihrer Wickelachse parallel zur Geometrieachse 05 ausgerichteten Etikettenrolle 20 an deren Innen- und/oder Außenumfang beispielsweise durch klemmen und/oder hintergreifen ausgebildeten Etikettenrollengreiferarmen 22, wobei an dem Etikettenrollengreifer 02 mindestens eine der Zahl der Etikettenrollengreiferarme 22 entsprechende Anzahl von beispielsweise als Zwischenlagengreiferarme ausgeführten Zwischenlagenaufnahmearmen 32 in einer Umfangsrichtung um die Geometrieachse 05 gesehen gleichmäßig um die Geometrieachse 05 verteilt zwischen den Etikettenrollengreiferarmen 22 gemeinsam relativ zu diesen parallel zur Geometrieachse 05 (i.e. normal zur Greiferebene 04) beweglich und radial zu dieser beabstandet angeordnet sind.

Die Aufnahmevorrichtung 03 für flächige Zwischenlagen 30 kann wie beschrieben eine oder mehrere auch als Saugnäpfe, Saugtulpen oder Saugköpfe bezeichnete Saugglocken 31 als kurz auch als Aufnahmemittel bezeichnete Mittel zur Aufnahme von Zwischenlagen 30 umfassen, um Zwischenlagen 30 zu erfassen und aufzunehmen beziehungsweise von einer Etikettenrollen 20 bereitstellenden Palette abzuheben. Alternativ oder zusätzlich kann die Aufnahmevorrichtung 03 für flächige Zwischenlagen 30 beispielsweise so genannte Nadelgreifer oder Elektro-Adhäsionsgreifer umfassen.

Alternativ oder zusätzlich zu den voranstehenden Ausgestaltungen können statt der gesamten Aufnahmevorrichtung 03 für die flächigen Zwischenlagen 30 nur das oder die kurz auch als Aufnahmemittel bezeichneten Mittel zur Aufnahme von Zwischenlagen 30 relativ zur Position der Greifvorrichtung 02 ortsveränderlich und zwischen zwei beispielhaft in Fig. 3 und Fig. 4 dargestellten Endlagen A, B in einer linearen Richtung beweglich sein. Hiernach muss nicht die gesamte Aufnahmevorrichtung 03 ortsveränderlich sein, sondern nur Teile davon, wie beispielsweise die Saugglocken 31 und alle weiteren am die Verfahrbewegung erzeugenden Betätigungsmittel 34 befestigten Bauteile.

Zusätzliche, über eine vollständige Lösung der gestellten Aufgabe und/oder über die gegebenenfalls zu den einzelnen Merkmalen voranstehend genannten Vorteile hinausgehende Vorteile gegenüber dem Stand der Technik ergeben sich wie folgt.

Ein voranstehend beschriebener Greiferkopf 01 erlaubt die Verwirklichung einer Vorrichtung und eines Verfahrens zum bedienerfreien Etikettenrollenwechsel.

Grundsätzlich sind die voranstehend beschriebene Vorrichtung und das ebenfalls voranstehend beschriebene Verfahren zum bedienerfreien Etikettenrollenwechsel auch geeignet, anderes im Rollenformat mit Zwischenlagen palettiertes Material bedienerfrei zu wechseln. Ein Beispiel sind Folienrollen, welche ebenfalls mit Zwischenlagen palettiert bereitgestellt sind. Dabei kann es sich beispielsweise um Folienrollen handeln, wie sie etwa bei so genannten Stretch-Wicklern Anwendung finden.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Greifvorrichtung und/oder der Aufnahmevorrichtung des unabhängigen Anspruchs 1 offenbart und beanspruchbar. Alle Bereichsangaben hierin sind derart offenbart und beanspruchbar zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 01: Greiferkopf
- 02: Greifvorrichtung
- 03: Aufnahmevorrichtung
- 04: Greiferebene
- 05: Geometrieachse
- 06: Magazin

- 20: Etikettenrolle
- 21: Element
- 22: Etikettenrollengreiferarm

- 30: Zwischenlage
- 31: Saugglocke
- 32: Zwischenlagenaufnahmearm
- 33: Zwischenlagenaufnahmeelement
- 34: Betätigungsmittel

- 61: Widerhaken
- 62: Aufnahmedorne

- A: Endlage
- B: Endlage

## Patentansprüche

1. Greiferkopf (01) mit mindestens einer Greifvorrichtung (02) für Etikettenrollen (20) sowie mit einer Aufnahmevorrichtung (03) für flächige Zwischenlagen (30), wobei die Greifvorrichtung (02) zum Erfassen der Etikettenrollen (20) ortsfest im Greiferkopf (01) angeordnet ist, während die Aufnahmevorrichtung (03) für die flächigen Zwischenlagen (30) relativ zur Position der Greifvorrichtung (02) ortsveränderlich und zwischen zwei Endlagen (A, B) in einer linearen Richtung beweglich ist.

2. Greiferkopf nach Anspruch 1, wobei die Aufnahmevorrichtung (03) für flächige Zwischenlagen (30) eine oder mehrere Saugglocken (31) umfasst.

3. Greiferkopf nach Anspruch 1 oder 2, wobei die Aufnahmevorrichtung (03) für flächige Zwischenlagen (30) gegenüber der Greifvorrichtung (02) für Etikettenrollen (20) ortsveränderlich zwischen zwei Endlagen (A, B) in einer linearen Richtung entlang einer Geometrieachse (05) des Greiferkopfs (01) beweglich ist.

4. Greiferkopf nach einem der voranstehenden Ansprüche, wobei die Greifvorrichtung (02) für Etikettenrollen (20) eine zentrale Geometrieachse (05), und mindestens zwei gleichmäßig um die Geometrieachse (05) verteilt angeordnete Etikettenrollengreiferarme (22) umfasst.

5. Greiferkopf nach Anspruch 4, wobei die Aufnahmevorrichtung (03) für flächige Zwischenlagen (30) mindestens einen Zwischenlagenaufnahmearm (32) in einer Umfangsrichtung um die Geometrieachse (05) gesehen zwischen den Etikettenrollengreiferarmen (22) relativ zu diesen parallel zur Geometrieachse (05) beweglich und radial zu dieser beabstandet umfasst.

6. Greiferkopf nach Anspruch 5, wobei an jedem Zwischenlagenaufnahmearm (32) mehrere Saugglocken (31) angeordnet sind.

7. Greiferkopf nach Anspruch 5 oder 6, wobei die Zwischenlagenaufnahmearme (32) zu einem gemeinsamen, parallel zur Geometrieachse (05) verschiebbar an der Greifvorrichtung (02) angeordneten Zwischenlagenaufnahmeelement (33) miteinander verbunden sind.

8. Greiferkopf nach Anspruch 7, wobei das Zwischenlagenaufnahmeelement (33) nachträglich an der Greifvorrichtung (02) anordbar und auch wieder entfernbar ist.

9. Greiferkopf nach einen der voranstehenden Ansprüche, wobei zwischen der Greifvorrichtung (02) und der Aufnahmevorrichtung (03) mindestens ein eine Bewegung zwischen den zwei Endlagen (A, B) in der linearen Richtung steuerndes Betätigungsmittel (34) angeordnet ist.

10. Greiferkopf nach einem der voranstehenden Ansprüche, wobei der Greiferkopf (01) zwischen mindestens einer Etikettenrolle (20) und einer Zwischenlage (30) unterscheidende Erkennungsmittel umfasst.

11. Greiferkopf nach einem der voranstehenden Ansprüche, wobei der Greiferkopf (01) Mittel zur Erfassung eines Abstands zumindest zu mindestens einer Etikettenrolle (20) und/oder einer Zwischenlage (30) umfasst.

12. Greiferkopf nach einen der voranstehenden Ansprüche, wobei die Greifvorrichtung (02) Mittel zum Greifen der Etikettenrollen (20) von deren Außenumfang her umfasst.

13. Greiferkopf nach einen der voranstehenden Ansprüche, wobei die Greifvorrichtung (02) Mittel (21) zum Greifen der Etikettenrollen (20) von deren Innenumfang her umfasst.

14. Greiferkopf nach einen der voranstehenden Ansprüche, wobei er eine Vakuumquelle (35) für die Aufnahmevorrichtung (03) umfasst.

15. Greiferkopf nach einen der voranstehenden Ansprüche, umfassend ein diesem zugeordnetes Magazin (06) mit Aufnahmedornen (62) zur Ablage abgehobener Zwischenlagen (30).
